# EUROPÄISCHE PATENTSCHRIFT

(11) **EP 1 436 574 B1**
(45) Veröffentlichungstag und Bekanntmachung des Hinweises auf die Patenterteilung: **13.07.2005**
(21) Anmeldenummer: 02777595.6
(22) Anmeldetag: 26.09.2002
(51) Int. Cl.: G01G 21/24, G01G 3/14, G01L 1/22

(54) **DÜNNSTELLEN-BIEGELAGER FÜR EINE KRAFTMESSEINRICHTUNG UND VORRICHTUNG ZUR KRAFTÜBERTRAGUNG MIT EINEM SOLCHEN**
NARROW-SECTIONED ELASTIC BEARING FOR A FORCE-MEASURING DEVICE AND A FORCE-TRANSMISSION DEVICE WHICH USES THE SAME
PALIER ELASTIQUE A PARTIE MINCE POUR UN DISPOSITIF DYNAMOMETRIQUE ET DISPOSITIF POUR LA TRANSMISSION DE FORCE COMPRENANT UN TEL PALIER

(30) Priorität: 02.10.2001 DE 10148762
(43) Veröffentlichungstag der Anmeldung: 14.07.2004
(73) Patentinhaber: Mettler-Toledo GmbH, 8606 Greifensee (CH)
(72) Erfinder: METZGER, Andreas, CH-8708 Männedorf (CH); BURKHARD, Hans-Rudolf, CH-8492 Wila (CH)
(86) Internationale Anmeldenummer: PCT/IB2002/003973
(87) Internationale Veröffentlichungsnummer: WO 2003/029765

(56) Entgegenhaltungen:
- EP-A- 0 518 202
- EP-A- 1 054 242
- EP-A- 1 083 420

## Beschreibung

Die Erfindung betrifft ein Dünnstellen-Biegelager zur elastischen Verbindung von Materialbereichen, welches durch benachbarte materialfreie Bereiche entsteht, sowie eine Vorrichtung zur Kraftübertragung für eine Kraftmesseinrichtung, insbesondere eine Waage mit mindestens einem derartigen Biegelager. Die Vorrichtung zur Kraftübertragung weist einen feststehenden Bereich, ein mindestens einen Übersetzungshebel umfassendes, der Kraftübertragung zu einem Messwandler dienendes Hebelwerk, und mindestens ein der Krafteinleitung in das Hebelwerk dienendes längssteifes, biegeelastisches und mindestens eine Dünnstelle aufweisendes Koppelelement auf, wobei der mindestens eine Hebel mittels eines eine Dünnstelle aufweisenden Biegelagers am feststehenden Bereich oder an einem vorgeschalteten Hebel abgestützt ist. Mindestens ein Dünnstellenbereich ist durch konkav ausgebildete, an materialfreie Bereiche angrenzende Oberflächen begrenzt.

Dünnstellen-Biegelager der genannten Art kommen durch lokalen Materialabtrag oder Verformung zu Stande. Sie zeichnen sich aus durch eine hohe Biegsamkeit bei geringen Rückstellkräften für kleine Auslenkungen um die Biegeachse bei gleichzeitig hoher Steifigkeit gegen Belastungen in andere Richtungen. Sie finden vorwiegend Verwendung in Präzisionsapparaten und bestehen bevorzugt aus Aluminium-Legierungen.

Eine Vorrichtung zur Kraftübertragung mit einem Dünnstellen-Biegelager findet häufig ihren Einsatz in Kraftmesseinrichtungen, insbesondere Waagen, welche zur Umsetzung der Kraftwirkung einer auf eine Waagschale aufgelegten Last in ein elektrisches Signal nach dem Prinzip der elektromagnetischen Kraftkompensation arbeiten. Der Zweck einer solchen Vorrichtung besteht darin, die der aufgelegten Last entsprechende Gewichtskraft, beispielsweise in einer Waage, soweit zu untersetzen, dass die dadurch gewonnene Kraft in ein an den verfügbaren Belastungsbereich einer Kraftmesszelle angepasstes Messsignal umgewandelt werden kann. Die Auslenkung der Übersetzungshebel und damit der zugehörigen Biegelager in einer solchen nach dem Prinzip der elektromagnetischer Kraftkompensation arbeitenden Kraftmesseinrichtung sind bekanntermassen sehr klein.

Eine Kraftmesseinrichtung der beschriebenen Art weist ein Parallelogramm auf mit zwei Parallel-Lenkern mit einem einen feststehenden Bereich bildenden und einem vertikal beweglichen Parallelogramm-Schenkel, einem über ein längssteifes biegeelastische Koppelelement an das Parallelogramm zur Krafteinleitung gekoppeltes die Kraft untersetzendes Hebelwerk, welches aus mindestens einem Hebel besteht und an dem feststehenden Bereich des Parallelogramms abgestützt ist. Ein Koppelelement ist vorwiegend beidseitig von einer eine jeweilige Angriffsstelle bildenden Dünnstelle begrenzt. Im Fall eines aus mehreren Hebeln bestehenden Hebelwerks sind die Hebelarme nachgeschalteter Hebel über jeweils ein Koppelelement miteinander verbunden und über Biegelager ebenfalls an dem feststehenden Bereich oder an einem vorgängigen Hebel abgestützt.

Eine solche Vorrichtung ist in der EP 0 518 202 A1 beschrieben, wobei die über mindestens einen an einem feststehenden Bereich abgestützten Übersetzungshebel und über mindestens ein längssteifes, biegeelastisches Koppelelement verfügende Kraftmesseinnchtung aus einem einstückigen Materialblock gefertigt ist. Die materialfreien Bereiche sind in Form von dünnen den Materialblock durchtrennenden Schnittlinien ausgebildet. Die dünnen Schnittlinien, welche vorzugsweise mittels Funkenerosion erzeugt werden, durchsetzen den Materialblock senkrecht zur Drehebene des mindestens einen Übersetzungshebels. Der den mindestens einen Hebel bildende Materialbereich hängt mit dem den feststehenden Bereich bildenden Materialbereich lediglich durch ein eine Abstützstelle bildendes Biegelager und durch eine ein Koppelelement bildende lokalisierte Angriffsstelle zusammen. Koppelelement und Abstützstelle sind ebenfalls aus dem Materialblock ausgebildet.

Aus der EP 1 054 242 A2 ist ein nach dem Pnnzip der elektromagnetischen Kraftkompensation arbeitender Wägeaufnehmer bekannt, dessen wesentliche Teile - Parallelogramm, Hebelwerk, Koppelelemente und Abstützstellen - aus einem einzigen Materialblock herausgearbeitet sind, wobei ein gehäusefester Grundkörper des Materialblocks sich in den Raum zwischen den beiden Parallelogrammlenkern hinein erstreckt und einen Abstützpunkt für einen ersten Übersetzungshebel bildet.

Mindestens ein Hebel ist, zumindest teilweise, in zwei Hebel aufgeteilt und mindestens ein Koppelelement in zwei Teilkoppelelemente, die symmetrisch auf beiden Seiten eines vorkragenden Teils des gehäusefesten Grundkorpers angeordnet sind. Das Herausarbeiten der einzelnen Bestandteile des Wägeaufnehmers aus einem einzigen Materialblock kann entweder durch Fräsen oder Erodieren erfolgen, ebenso ist ein Gussverfahren zur Herstellung eines solchen Wägeaufnehmers denkbar.

Bei den genannten Kraft- oder Wägeaufnehmern ist eine Begrenzung ihrer Auflösung und der Genauigkeit der Wägung durch die die Rückstellkraft bewirkende Federkonstante des Kraftübertragungssystems vorgegeben. Diese Federkonstante wird hauptsächlich durch die in Form von Biegelagern ausgebildeten Abstützstellen der Hebel und Angriffsstellen der Koppelelemente bestimmt, wobei der der elektromagnetischen Kraftkompensationsspule unmittelbar vorgeschaltete Hebel den Haupteinfluss ausübt. Die Biegelager der Hebel und der Koppelelemente sind häufig als Dünnstellen aus gegeneinander konkav verlaufenden bogenförmigen, an materialfreie Bereiche angrenzende Oberflächen ausgebildet, wobei die Bogen oft einen im wesentlichen konstanten Radius aufweisen, was eine einfache Herstellung sichert.

Eine Reduktion der Federkonstante eines Biegelagers lässt sich vorzugsweise durch eine Reduktion der Materialstärke der das Biegelager bildenden Dünnstelle erzielen. Einerseits kann die Breite der Dünnstelle in der Richtung senkrecht zur Drehebene des mindestens einen Übersetzungshebels verringert werden, wie beispielsweise in der EP 0 518 202 A1 beschrieben wird, und wie es auch durch die Teilung der Hebel inklusive deren Abstützstellen sowie der Koppelelemente in dem Wägeaufnehmer, wie ihn die EP 1 054 242 A2 beschreibt, bewirkt wird. Eine solche Aufteilung insbesondere der Abstützstellen der Übersetzungshebel und/oder der Angriffsstellen der Koppelelemente kann vorzugsweise auch mittels einer Sackbohrung zentral von oben in einen Materialblock (beispielweise einer solchen gemäss der EP 0 518 202 A1) erzeugt werden, wie dies in der EP 1 083 420 A2 offenbart wird. Ebenso kann eine Sackbohrung von einer der schmalen senkrecht zur Drehebene des mindestens einen Übersetzungshebels stehenden Seiten in den Materialblock eindringen.

Andererseits ist auch eine Reduktion der Dicke der das Biegelager bildenden Dünnstelle in der Drehebene des mindestens einen Übersetzungshebels denkbar. Insbesondere für Dünnstellen, die von konkav ausgeformten, an materialfreie Bereiche angrenzenden Oberflächen begrenzt sind, die jeweils einen etwa konstanten relativ kleinen Radius aufweisen, ergibt diese Vorgehensweise ein dünnes Biegelager mit einem recht gut definierten Drehzentrum. Allerdings besteht für ein solches Biegelager die Gefahr eines Bruchs der Dünnstelle, wenn sie einer externen Stossbelastung ausgesetzt ist. Diese Gefahr ist umso grösser, je geringer die Dicke oder Mächtigkeit der Dünnstelle ist und je grösser die Krümmung der die Dünnstelle begrenzenden materialfreien Bereiche ist.

Es sind daher Dünnstellen bekannt, die eine länglich gestreckte Form der die Dünnstelle begrenzenden materialfreien Bereiche besitzen, da diese die Stabilität des Biegelagers hinsichtlich der Empfindlichkeit auf eine Stossbelastung von aussen, beispielsweise aufgrund eines Schlages auf eine das Biegelager enthaltende Kraftmesseinrichtung, nachhaltig vergrössert. Eine solche langgestreckte Dünnstelle kann einem Stoss, ohne Bruch, seitlich ausweichen, wobei dieses Ausweichen meist reversibel ist. Eine ähnlich hohe Stabilität lässt sich auch mit einer Dünnstelle erreichen, die von konkaven, an materialfreie Bereiche angrenzenden Oberflächen mit jeweils einem etwa konstanten Radius begrenzt ist, wenn dieser Radius genügend gross gewählt wird. Eine weitere Form eines gegenüber Stössen relativ unempfindlichen Biegelagers sieht eine Ausgestaltung seiner Dünnstelle in Form mindestens zweier nebeneinander liegender, der Dünnstelle abgewandter konkaver, an materialfreie Bereiche angrenzender Oberflächen mit jeweils etwa konstanten Radien vor.

Nachteilig ist bei diesen Ausführungsformen einer ein Dünnstellen-Biegelager bildenden Dünnstelle, dass das Drehzentrum des Biegelagers nur ungenau festgelegt ist.

Aufgabe der vorliegenden Erfindung ist es daher, ein Dünnstellen-Biegelager zu schaffen, das eine hohe Schlagunempfindlichkeit und gleichzeitig ein gut lokalisierbares Drehzentrum aufweist.

Diese Aufgabe wird durch ein Dünnstellen-Biegelager gemäss dem Anspruch 1 gelöst. Ein Dünnstellen-Biegelager zur elastischen Verbindung von Materialbereichen für eine Vorrichtung zur Kraftübertragung ist mit einem feststehenden Bereich, mit einem mindestens einen Übersetzungshebel umfassenden, der Kraftübertragung zu einem Messwandler dienenden Hebelwerk, mit mindestens einem der Krafteinleitung in das Hebelwerk dienenden längssteifen, biegeelastischen und mindestens eine Dünnstelle aufweisenden Koppelelement versehen, wobei der mindestens eine Hebel mittels eines eine Dünnstelle aufweisenden Biegelagers am feststehenden Bereich und/oder einem vorgeschalteten Hebel abgestützt ist. Eine solche Dünnstelle entsteht durch benachbarte materialfreie Bereiche und weist mindestens einen Dünnstellenbereich auf, der durch konkav ausgebildete, an materialfreie Bereiche angrenzende Oberflächen begrenzt ist. Dabei weist mindestens einer der den Dünnstellenbereich begrenzenden materialfreien Bereiche eine eine Einschnürung des Dünnstellenbereichs bildende Form auf.

Durch die Einschnürung entsteht eine weitere Verschmälerung des Dünnstellenbereichs, wodurch sich die Federkonstante des Dünnstellen-Biegelagers weiter reduziert und das Biegelager somit flexibler wird. Gleichwohl ist das Dünnstellen-Biegelager robust genug, um Stösse von aussen zu verkraften, da der gesamte Dünnstellenbereich in seiner Länge genügend Elastizität besitzt, um infolge eines Stosses seitlich auszuweichen. Das Drehzentrum des Dünnstellen-Biegelagers befindet sich im Bereich Einschnürung des Dünnstellenbereichs und ist daher gut lokalisiert.

In einer vorteilhaften Ausgestaltung des erfindungsgemässen Dünnstellen-Biegelagers ist dieses integrierter Bestandteil eines Materialblocks, wobei das Dünnstellen-Biegelager durch dünne den Materialblock senkrecht zu seiner ausgedehnten Ebene durchtrennende Schnittlinien und/oder durch mittels spanabhebender Bearbeitung erzeugte Hohlräume des Materialblocks gebildet ist.

In einer bevorzugten Ausführungsform weisen die den Dünnstellenbereich begrenzenden materialfreien Bereiche eine längliche Form mit mindestens einer Ausbuchtung, eine Einschnürung des Dünnstellenbereichs in dessen Mitte bildend, auf.

Fertigungstechnisch ist ein solches Dünnstellen-Biegelager relativ einfach herzustellen, da die Ausbuchtung der den Dünnstellenbereich begrenzenden materialfreien Bereiche wenig weiteren Materialabtrag erfordert, somit in einem zweiten Arbeitsgang oder bereits während einer oft ohnehin notwendigen Nachbearbeitung der Oberfläche des Dünnstellenbereichs erfolgen kann.

Eine andere bevorzugte Ausgestaltung des erfindungsgemässen Dünnstellen-Biegelagers sieht vor, dass die den Dünnstellenbereich begrenzenden materialfreien Bereiche eine längliche Form aufweisen, wobei sie eine Einschnürung des Dünnstellenbereichs in Form einer konstanten Verjüngung in Richtung zur Mitte des Dünnstellenbereichs ausbilden. Für ein Dünnstellen-Biegelager, das mindestens eine Ausbuchtung seiner den Dünnstellenbereich begrenzenden und eine längliche Form aufweisenden materialfreien Bereiche aufweist, ist eine Einschnürung, welche in Form einer konstanten Verjüngung in Richtung zur Mitte des Dünnstellenbereichs ausgebildet ist, eine weitere mögliche Ausführungsform.

Eine andere zweckmässige Form eines Dünnstellen-Biegelagers ist gekennzeichnet, dadurch dass die den Dünnstellenbereich begrenzenden materialfreien Bereiche durch jeweils eine bogenförmige einen ersten Radius aufweisende Ausnehmung mit einer eingelagerten einen zweiten kleineren Radius aufweisenden Ausnehmung charakterisiert sind.

In weiteren Ausgestaltungen eines erfindungsgemässen Dünnstellen-Biegelagers befinden sich innerhalb einer bogenförmigen Ausbuchtung der den Dünnstellenbereich begrenzenden materialfreien Bereiche weitere bogenförmige Ausbuchtungen mit im wesentlichen grösseren Krümmungen.

Ein erfindungsgemässes Dünnstellen-Biegelager findet bevorzugt Verwendung in einer Vorrichtung zur Kraftübertragung für eine Kraftmesseinrichtung, insbesondere für eine Waage. In einer solche Vorrichtung zur Kraftübertragung mit einem feststehenden Bereich, mit einem mindestens einen Übersetzungshebel umfassenden, der Kraftübertragung zu einem Messwandler dienenden Hebelwerk, mit mindestens einem der Krafteinleitung in das Hebelwerk dienenden längssteifen, biegeelastischen und mindestens eine Dünnstelle aufweisenden Koppelelement, wobei der mindestens eine Hebel mittels eines eine Dünnstelle aufweisenden Biegelagers am feststehenden Bereich und/oder einem vorgeschalteten Hebel abgestützt ist. Eine Dünnstelle weist mindestens einen Dünnstellenbereich auf, der durch konkav ausgebildete, an materialfreie Bereiche angrenzende Oberflächen begrenzt ist, wobei mindestens einer der den Dünnstellenbereich begrenzenden materialfreien Bereiche eine eine Einschnürung des Dünnstellenbereichs bildende Form aufweist.

Dies wirkt sich positiv im Hinblick auf eine verbesserte Auflösung und eine höhere Genauigkeit, beispielsweise einer eine solche Vorrichtung zur Kraftübertragung beinhaltenden Kraftmesseinrichtung, aus. Ebenso ist die Vorrichtung zur Kraftübertragung robust gegenüber Stössen von aussen, da das Dünnstellen-Biegelager aufgrund seiner insgesamt länglichen Form reversibel ausweichen kann. Auch befindet sich das Drehzentrum des Dünnstellen-Biegelagers im Bereich der Einschnürung und ist daher gut lokalisiert. Durch diese gegenüber dem Stand der Technik weitaus besser definierte Lage wird die Niveauempfindlichkeit der Kraftmesseinrichtung massiv reduziert.

In weiteren bevorzugten Ausführungsformen der Erfindung sind das Hebelwerk und die Koppelelemente integrierter Bestandteil eines Materialblocks oder gar die gesamte Vorrichtung zur Kraftübertragung ist integrierter Bestandteil eines Materialblocks. Dabei sind entweder die materialfreien Bereiche durch dünne, den Materialblock senkrecht zur Drehebene des mindestens einen Übersetzungshebels durchtrennende Schnittlinien und/oder durch spanabhebende Bearbeitung erzeugte Hohlräume des Materialblocks gebildet.

Für die als Biegelager ausgebildeten Abstützstellen der Hebel und Angriffsstellen der Koppelelemente der erfindungsgemässen Vorrichtung zur Kraftübertragung bilden in einer bevorzugten Ausgestaltung der Erfindung die den Dünnstellenbereich eines Biegelagers begrenzenden materialfreien Bereiche eine Einschnürung des Dünnstellenbereichs in Form einer konstanten Verjüngung ausgehend vom Rand in Richtung zur Mitte des Dünnstellenbereichs aus.

In einer weiteren Ausgestaltung der Erfindung weisen die eine Biegestelle begrenzenden materialfreien Bereiche eine längliche Form mit mindestens einer Ausbuchtung auf und bilden mindestens eine Einschnürung im Zentrum des Dünnstellenbereichs. In einer Fortführung hiervon ist diese Einschnürung des Dünnstellenbereichs in Form einer konstanten Verjüngung in Richtung zur Mitte des Dünnstellenbereichs ausgestaltet.

In einer alternativen Ausführungsform können jedoch auch die den Dünnstellenbereich begrenzenden materialfreien Bereiche durch jeweils eine bogenformige einen ersten Radius aufweisende Ausnehmung, mit einer eingelagerten einen zweiten kleineren Radius aufweisenden Ausnehmung charakterisiert sein. Diese Gestaltungsform ist dann besonders vorteilhaft, wenn die materialfreien Bereiche des eine Vorrichtung zur Kraftübertragung bildenden Materialblocks durch spanabhebende Bearbeitung, wie beispielsweise Fräsen, erzeugt werden. In einer vorteilhaften Weiterbildung befinden sich innerhalb einer bogenförmigen Ausbuchtung der den Dünnstellenbereich begrenzenden materialfreien Bereiche weitere bogenförmige Ausbuchtungen mit im wesentlichen grösseren Krümmungen.

In einer weiteren zweckmässigen Ausgestaltung der Erfindung ist die Materialstärke der Angriffsstelle des mindestens einen Koppelelements sowie der Abstützstelle des mindestens eines Hebels durch Ausnehmungen in dem Materialblock, ausgehend von seinen beiden zur Drehebene des mindestens einen Hebels parallelen Hauptflächen, verringert. Eine Reduktion der Materialstärke kann ebenso durch Aufteilung eines Hebels und/oder Koppelelements, mit oder ohne zugehörige Biegelager, mittels Ausnehmungen aus der Mitte des Materialblocks erzeugt werden.

Bevorzugte Ausführungsformen und Ausgestaltungen des erfindungsgemässen Dünnstellen-Biegelagers sowie einer ein solches beinhaltenden Vorrichtung zur Kraftübertragung sind in den Zeichnungen dargestellt und im Folgenden anhand der Figuren im Detail beschrieben. Es zeigen:
- Figur 1:: ein Ausführungsbeispiel einer Kraftmesseinrichtung mit abgenommenem Messwandler, in der Ansicht auf die Parallelogrammebene,
- Figur 2a:: eine stark vergrösserte Ansicht einer ein Biegelager gemäss dem Stand der Technik bildenden Dünnstelle, in einem Schnitt in der Parallelogrammebene,
- Figur 2b:: eine stark vergrösserte Ansicht einer ein erfindungsgemässes Biegelager bildenden Dünnstelle, in einem Schnitt in der Parallelogrammebene, mit beidseitiger Ausbuchtung der die Dünnstelle begrenzenden materialfreien Bereiche,
- Figur 2c:: eine stark vergrösserte Ansicht einer weiteren erfindungsgemässen Dünnstelle, in einem Schnitt in der Parallelogrammebene, mit einer Ausbuchtung eines die Dünnstelle begrenzenden materialfreien Bereichs,
- Figur 2d:: eine stark vergrösserte Ansicht einer dritten erfindungsgemässen Dünnstelle, in einem Schnitt in der Parallelogrammebene, mit beidseitig ineinander liegenden weiteren Ausbuchtungen der die Dünnstelle begrenzenden materialfreien Bereiche,
- Figur 3:: eine stark vergrösserte Ansicht einer Ausführungsform der erfindungsgemässen Dünnstelle gemäss Fig. 2b, wobei die Anschluss-Schnittlinien der die Dünnstelle begrenzenden materialfreien Bereiche auf jeweils gegenüberliegenden Seiten ansetzen, in einem Schnitt in der Parallelogrammebene,
- Figur 4a:: eine stark vergrösserte Ansicht einer Ausführungsform der efindungsgemässen Dünnstelle als ein sich von aussen in Richtung der Mitte der Dünnstelle konstant verjüngender Materialbereich, in einem Schnitt in der Parallelogrammebene,
- Figur 4b:: eine stark vergrösserte Ansicht einer Fortführung der Ausgestaltung einer in der Figur 4a gezeigten Dünnstelle, in einem Schnitt in der Parallelogrammebene,
- Figur 5:: eine stark vergrösserte Ansicht einer Ausführungsform der erfindungsgemässen Dünnstelle mit etwa konstanten Radien der die Dünnstellen begrenzenden materialfreien Bereiche, in einem Schnitt in der Parallelogrammebene.

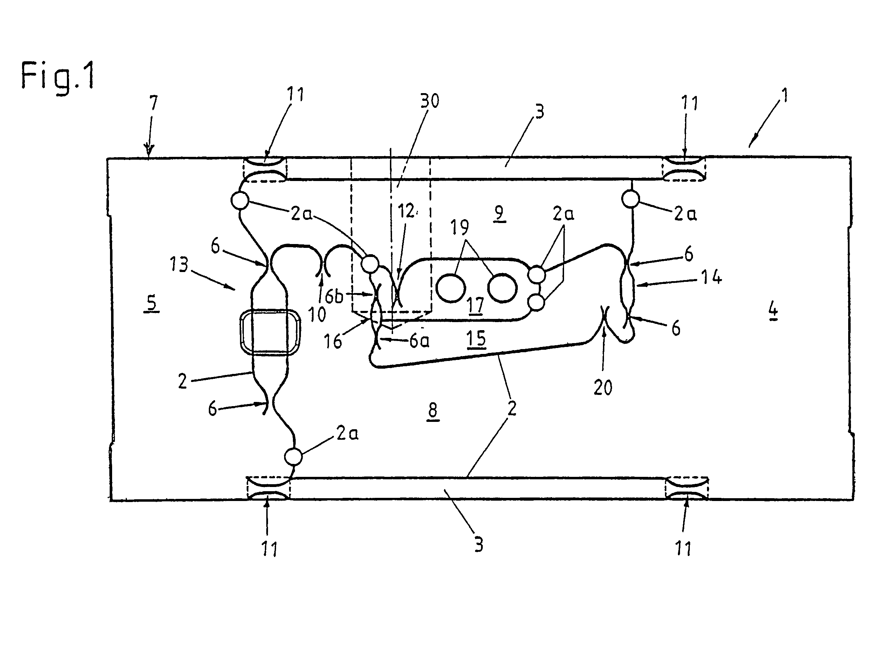

Die Figur 1 zeigt in der Seitenansicht bei abgenommenem Messwandler eine aus einem einstückigen im wesentlichen quaderförmigen Materialblock 1 ausgebildete Vorrichtung zur Kraftübertragung für eine Kraftmesseinrichtung, dessen Materialbereiche durch materialfreie Bereiche in Form von dünnen, den Materialblock 1 senkrecht zu seiner ausgedehnten Fläche durchsetzenden Schnittlinien 2 voneinander getrennt sind. Die Materialbereiche bilden in den Ebenen parallel zur ausgedehnten Fläche des Materialblocks 1 ein Parallelogramm mit einem oberen und einem unteren Parallelogramm-Lenker 3 und einem einen feststehenden Bereich 4 bildenden Parallelogramm-Schenkel sowie einem an konkav ausgebildeten, durch materialfreie Bereiche begrenzte Biegestellen 11 vertikal auslenkbaren Parallelogramm-Schenkel 5. Weitere Materialbereiche im Inneren des Materialblocks 1 bilden ein Hebelwerk mit drei hintereinander geschalteten Übersetzungshebeln 9, 15, 17, deren Drehebene in der Parallelogrammebene liegt. Somit korrespondiert die Drehebene der Übersetzungshebel 9, 15, 17 mit der Parallelogrammebene und liegt parallel zur Ebene der ausgedehnten Fläche des Materialblocks 1.

Der auslenkbare Parallelogramm-Schenkel 5, welcher der Aufnahme einer zu messenden Last - beispielsweise auf einer am Lastaufnahmeteil 7 angebrachten, hier nicht gezeigte Waagschale - dient, ist über ein erstes längssteifes, biegeelastisches Koppelelement 13 mit dem kurzen Hebelarm eines ersten Hebels 9 verbunden. Dieser stutzt sich über ein Biegelager 10 an einem ins Innere des Materialblocks 1 reichenden Ausleger 8 des feststehenden Bereichs 4 ab. Über ein zweites Koppelelement 14 ist der längere Hebelarm des ersten Hebels 9 mit dem kurzen Hebelarm eines zweiten Hebels 15 verbunden, welcher sich ebenfalls über ein Biegelager 20 am Ausleger 8 abstützt. Ein dritter Hebel 17, der mit dem zweiten Hebel über ein drittes Koppelelement 16 verbunden ist, stützt sich mit dem dritten Biegelager 12 am längeren Hebelarm des ersten Hebels 9 ab. Die Bohrungen 19 dienen der Befestigung einer hier nicht gezeigten Verlängerung des längeren Hebelarms des dritten Hebels 17 zu einer hier ebenfalls nicht dargestellten Kraftkompensationsvorrichtung. Die Bauform einer solchen Vorrichtung zur Kraftübertragung hat den Vorteil einer hohen Festigkeit bei kleinem Bauvolumen.

Parallelogramm, Koppelelemente, Hebelwerk sowie Biegelager sind durch materialfreie Bereiche in Form dünner Schnittlinien 2 im Materialblock 1 begrenzt.

Diese Schnittlinien 2 werden vorzugsweise mittels Funkenerosion mit einem Erosionsdraht erzeugt, wobei die Bearbeitungsbohrungen 2a zur Einführung des Erosionsdrahtes vorhanden sind.

Die Biegelager 10 und 20 sind als stehende Lager ausgebildet, wohingegen das Biegelager 12 hängend den dritten Hebel 17 am ersten Hebel 9 abstützt.

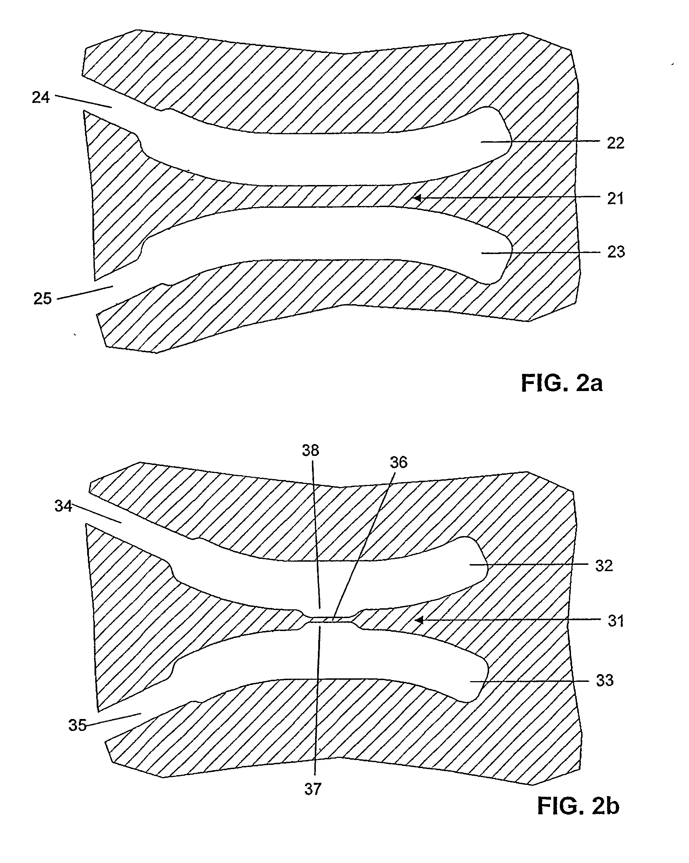

Die Angriffsstellen 6, 6a, 6b der Koppelelemente 13, 14 und 16 sowie die als Biegelager 10, 20, 12 ausgebildeten Abstützstellen der Hebel 9, 15, 17 sind als Dünnstellen ausgebildet. Die die Rückstellkraft bestimmende Federkonstante der Vorrichtung zur Kraftübertragung, welche erheblichen Einfluss auf die Genauigkeit der Waage ausübt, wird hauptsächlich bestimmt von der Federkonstante dieser Angriffsstellen und Biegelager, insbesondere von jenen des dritten Hebels 17. Daher sind die Angriffsstellen 6a, 6b des Koppelelements 16 sowie das Biegelager 12 als Dünnstellen auf besondere, erfindungsgemässe Weise ausgebildet, wie in den Figuren 2b bis 5, die jeweils verschiedene Ausführungsformen der betreffenden Dünnstellen darstellen, detailliert gezeigt ist. Es ist insbesondere erforderlich, die Angriffsstelle 6b des Koppelelements 16, welche mit dem Biegelager 12 auf gleicher Höhe liegt, in erfindungsgemässer Weise auszugestalten.

In der dargestellten Ausführungsform ist weiterhin eine Sackbohrung 30 zentral von oben in den Materialblock 1 abgesenkt worden, die sich über den Bereich mit dem dritten Koppelelement 16 und der Abstützstelle 12 des dritten Hebels 17 erstreckt und damit diese aufteilt, und so deren Breite in der Richtung senkrecht zur Drehebene der Übersetzungshebel reduziert, was die betreffenden Biegelager ebenfalls weicher macht.

Die Figur 2a zeigt, zum Vergleich mit den weiter unten beschriebenen erfindungsgemässen Dünnstellen, eine - beispielsweise die das Biegelager 12 bildende - Dünnstelle, gemäss dem Stand der Technik. Diese mittels Funkenerosion erzeugte Dünnstelle erstreckt sich über eine Länge von etwa 0,5 bis 2 Millimetern mit einer Dicke von etwa 50 bis 100 Mikrometern. Der Dünnstellenbereich 21 wird begrenzt von zwei an konkav ausgeformte Oberflächen angrenzende, gegenüber ihren Anschluss-Schnittlinien 24, 25, die als dünne, beispielweise den ersten vom dritten Hebel trennende Schnittlinien 2 weitergeführt sind, leicht erweiterten Schnittlinienzonen 22, 23. Die Erweiterung der Schnittlinienzonen 22, 23 wird durch Nachbearbeitung der den Dünnstellenbereich 21 begrenzenden Oberfläche erzeugt. Aus der Figur nicht ersichtlich, jedoch nicht unwesentlich, ist der Zweck dieser Nachbearbeitung. Sie dient nicht nur der präzisen Formgebung, sondern auch der Glättung der Oberfläche des Dünnstellenbereichs.

Problematisch bei diesem relativ langen weitgehend gleichmässig breiten Dünnstellenbereich 21 ist, dass das Drehzentrum des durch die Dünnstelle gebildeten Biegelagers ungenau definiert ist und infolgedessen die Niveauempfindlichkeit der Waage leidet. Andererseits kann, als Folge einer seitlich auf die Wägezelle wirkenden externen Stossbelastung, eine solche Dünnstelle durch seitliches Ausweichen eine etwa s-förmige elastische Verformung annehmen, ohne dass sie bricht. Im Allgemeinen ist diese Verformung reversibel, und die Wägezelle nimmt keinen Schaden.

Dieser Vorteil bleibt auch bei einer erfindungsgemässen Ausformung einer Dünnstelle erhalten, wobei die Verbesserung darin besteht, dass, wie in der Figur 2b dargestellt, weiteres Material in Form jeweils einer Ausbuchtung 37, 38 der Schnittlinienzonen 32, 33 aus dem langgestreckten Dünnstellenbereich 31 in dessen Zentrum herausgearbeitet ist, wodurch sich eine Einschnürung 36 des Dünnstellenbereichs 31 über eine Länge von etwa 0,2 mm bis 0,6 mm bildet. Auf diese Weise wird die Dicke der Dünnstelle weiter reduziert und damit die Federkonstante des Biegelagers. Andererseits ist bei dieser Dünnstelle das Drehzentrum des Biegelagers genau definiert, nämlich um das Zentrum der Einschnürung.

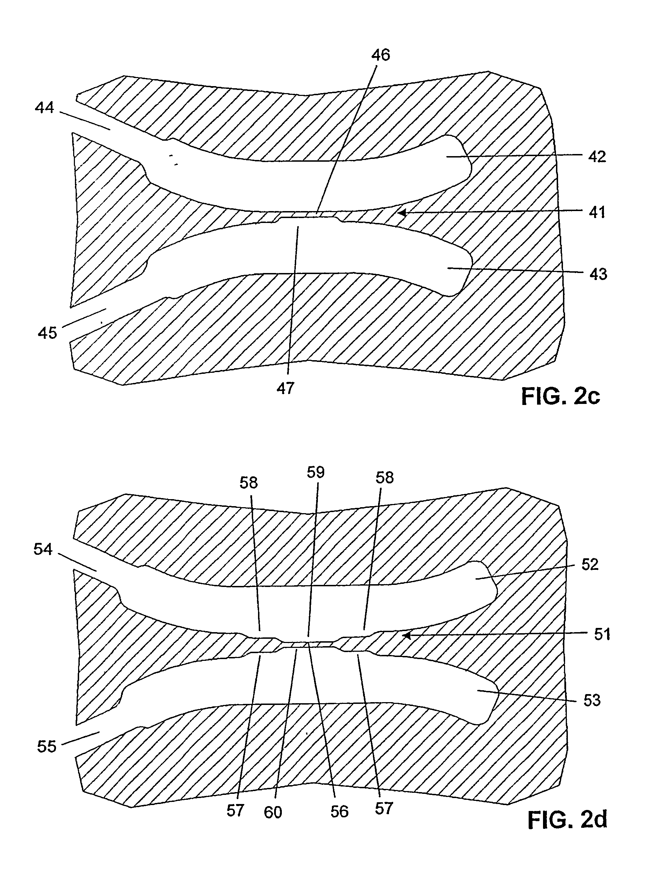

Eine weitere Ausführungsform für eine erfindungsgemässe Dünnstelle findet sich in der Figur 2c. Hier weist nur eine der an konkav ausgeformte Oberflächen angrenzende Schnittlinienzonen 42, 43 eine eine Einschnürung 46 des Dünnstellenbereichs 41 bildende Ausbuchtung 47 auf, was ebenfalls zu einer Verschmälerung der Dünnstelle mit definiertem Drehzentrum des Biegelagers führt.

In der Figur 2d ist in einer Weiterbildung der Erfindung eine Dünnstelle dargestellt, für welche die an konkav ausgeformte Oberflächen angrenzende Schnittlinienzonen 52, 53 beidseitig im Bereich einer ersten Ausbuchtung 57, 58 eine zweite Ausbuchtung 59, 60 aufweisen. Auf diese Weise wird neben einer weiteren Verengung des Dünnstellenbereichs 51 eine noch genauere Lage des Drehzentrums des Biegelagers definiert. Es versteht sich von selbst, dass diese weitere Verengung des Dünnstellenbereichs 51 auch durch Ausbuchtung einer der an konkav ausgeformte Oberflächen angrenzende Schnittlinienzonen 52, 53 auf nur einer Seite entstehen kann, ebenso wie weitere Ausbuchtungen, die in der jeweils vorgängigen, breiteren Ausbuchtung zu liegen kommen, ebenfalls als Varianten der Erfindung denkbar sind.

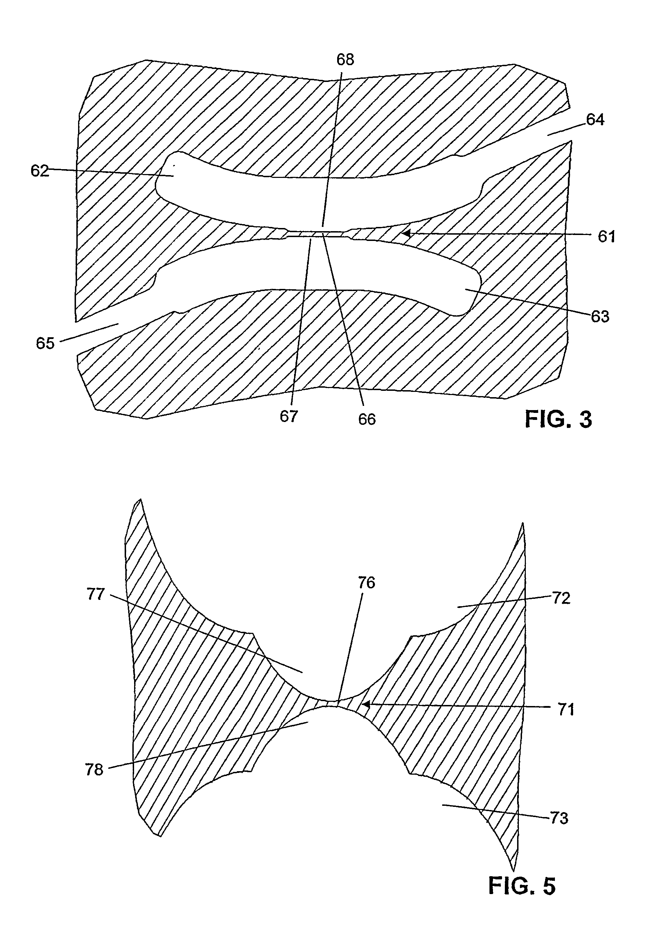

In der Figur 3 ist nun eine Ausgestaltung einer Dünnstelle für ein erfindungsgemässes Biegelager gezeigt, für welche die Anschluss-Schnittlinien 64, 65 der zwei an konkav ausgeformte Oberflächen angrenzende Schnittlinienzonen 62, 63 auf jeweils gegenüberliegenden Seiten ansetzen. Die Ausgestaltung der Einschnürung 66 des Dünnstellenbereichs 61 ist hier lediglich beispielhaft, wie die in der Figur 2b dargestellten, gezeigt, kann jedoch selbstverständlich auch die in den Figuren 2c und 2d abgebildeten Formen aufweisen.

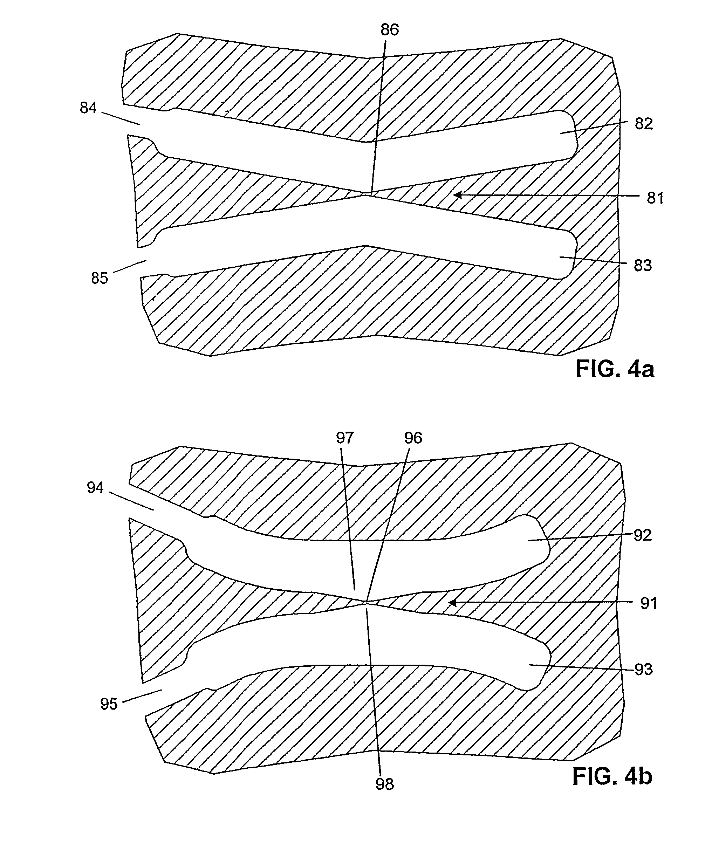

Die Figur 4a zeigt eine weitere Variante einer Dünnstelle. Hier formen die beiden den Dünnstellenbereich 81 begrenzenden als Schnittlinienzonen 82, 83 ausgestalteten materialfreien Bereiche einen sich von aussen in Richtung der Mitte des Dünnstellenbereichs 81 konstant verjüngenden Materialbereich aus, der somit mittig die geringste Dicke aufweist. Allerdings ist die Verjüngung in der Figur stark übertrieben dargestellt. In der erfindungsgemässen Ausführungsform ist sie äusserst gering, und die Differenz zwischen den Abständen der Schnittlinienzonen 82, 83 in der Mitte und im äusseren Bereich beträgt lediglich einige Mikrometer. Diese Form einer Einschnürung 86 des Dünnstellenbereichs 81 hat jedoch den Vorteil, dass sie fertigungstechnisch leicht herzustellen ist und überdies ein genau definiertes Drehzentrum für das Dünnstellen-Biegelager bewirkt. Die zur Dicke des Dünnstellenbereichs 81 vergleichsweise grosse Länge desselben ergibt auch hier, wie vorgängig bereits ausgeführt, den Effekt, dass bei Stossbelastungen lediglich eine vorübergehende elastische Verformung resultiert.

Eine Fortführung der Ausgestaltung einer Dünnstelle, wie in der Figur 4a gezeigt, zeigt die Figur 4b. Hier ist eine Einschnürung 96 des Dünnstellenbereichs 91 zunächst ähnlich dem in der Figur 2b gezeigten ausgeformt, unterscheidet sich jedoch von diesem dadurch, dass die Ausbuchtungen 97, 98 der den Dünnstellenbereich 91 begrenzenden Schnittlinienzonen 92, 93 sich zu dessen Mitte hin weiter verjüngen, beispielsweise mit konstanter Abnahme der Breite des Dünnstellenbereichs 91.

Es ist selbstverständlich, dass auch Dünnstellen für Biegelager, die eine konkave Ausformung ihrer jeweiligen sie begrenzenden an materialfreie Bereiche angrenzenden Oberfläche mit etwa konstantem Radius aufweisen, hergestellt werden können. Dies ist insbesondere dann vorteilhaft, wenn die materialfreien Bereiche des die Vorrichtung zur Kraftübertragung bildenden Materialblocks durch spanabhebende Bearbeitung, wie beispielsweise Fräsen, erzeugt werden. Eine beispielhafte Ausbildung einer solchen Dünnstelle zeigt die Figur 5, wiederum nicht massgetreu, indem die Länge im Vergleich zur Dicke gestaucht ist. Hier wird eine Einschnürung 76 des Dünnstellenbereichs 71 dadurch gebildet, dass die den Dünnstellenbereich 71 begrenzenden, als an konkav ausgebildete Oberflächen angrenzende Ausnehmungen 72, 73 mit etwa konstantem Radius gebildeten materialfreien Bereiche jeweils eine weitere an eine konkav ausgebildete Oberflächen angrenzende Ausnehmung 77, 78 des materialfreien Bereichs mit einen zweiten kleineren Radius beinhalten.

Es sollen hier weitere Ausbildungen einer Dünnstelle, bei welcher in die an konkav ausgebildete Oberflächen angrenzende Ausnehmungen der die Dünnstelle begrenzenden materialfreien Bereiche weitere an konkav ausgebildete Oberflächen angrenzende Ausnehmungen mit jeweils in abnehmender Folge kleiner werdenden, etwa konstanten Radien, eingelagert sind, nicht ausgeschlossen werden.

Ebenso sind auch für die Form der die Dünnstelle begrenzenden materialfreien Bereiche mit konstantem Radius, einseitige eine Einschnürung des Dünnstellenbereichs bildende Ausnehmungen denkbar.

Weiterhin denkbar sind auch Kombinationen aus einer langgestreckten Dünnstelle mit einer Einschnürung des Dünnstellenbereichs, bei welcher die die Dünnstelle begrenzenden materialfreien Bereiche eine Ausbuchtung mit konstantem Radius - auf einer oder auf beiden Seiten der Dünnstelle - aufweisen.

Es versteht sich von selbst, wie auch bereits im Zusammenhang mit der Figur 1 erwähnt, dass die mindestens eine erfindungsgemässe Dünnstelle aufweisenden Biegelager sich nicht über die gesamte Breite des Materialblocks senkrecht zur Parallelogrammebene erstrecken müssen. Es ist denkbar, dass die Breite der Angriffsstellen der Koppelelemente sowie der Abstützstellen der Hebel der erfindungsgemässen Vorrichtung zur Kraftübertragung entweder durch Ausnehmungen in dem Materialblock, ausgehend von seinen beiden zur Drehebene der Hebel parallelen, ausgedehnten Flächen des Materialblocks, verringert ist, oder dass durch Ausnehmungen aus der Mitte des Materialblocks Hebel und Koppelelemente - mit oder ohne die zugehörigen Biegelager - aufgeteilt sind.

### Bezugszeichenliste

| | |
|---|---|
| 1 | Materialblock |
| 2 | Schnittlinien |
| 2a | Bearbeitungsbohrung |
| 3 | Parallelogramm-Lenker |
| 4 | Feststehender Bereich |
| 5 | Vertikal auslenkbarer Parallelogramm-Schenkel |
| 6, 6a, 6b | Angriffsstellen der Koppelelemente |
| 7 | Lastaufnahmeteil |
| 8 | Ausleger des feststehenden Bereichs |
| 9 | Erster Hebel |
| 10 | Erstes Biegelager |
| 11 | Biegestellen des Parallelogramms |
| 12 | Drittes Biegelager |
| 13 | Erstes Koppelelement |
| 14 | Zweites Koppelelement |
| 15 | Zweiter Hebel |
| 16 | Drittes Koppelelement |
| 17 | Dritter Hebel |
| 19 | Bohrungen |
| 20 | zweites Biegelager |
| 30 | Sackbohrung |
| 21, 31, 41, 51, 61, 71, 81, 91 | Dünnstellenbereich |
| 22, 32, 42, 52, 62, 82, 92 | Schnittlinienzone |
| 23, 33, 43, 53, 63, 83, 93 | Schnittlinienzone |
| 24, 34, 44, 54, 64, 84, 94 | Anschluss-Schnittlinie |
| 25, 35, 45, 55, 65, 85, 95 | Anschluss-Schnittlinie |
| 36, 46, 56, 66, 76, 86, 96 | Einschnürung |
| 37, 47, 67, 97 | Ausbuchtung |
| 38, 98 | Ausbuchtung |
| 57, 58 | Erste Ausbuchtung |
| 59, 60 | Zweite Ausbuchtung |
| 72, 73 | Ausnehmung mit einen ersten Radius |
| 77, 78 | Ausnehmung mit einen zweiten Radius |

## Patentansprüche

1. Dünnstellen-Biegelager zur elastischen Verbindung von Materialbereichen für eine Vorrichtung zur Kraftübertragung, welche Vorrichtung mit einem feststehenden Bereich (4), mit einem mindestens einen Übersetzungshebel (9, 15, 17) umfassenden, der Kraftübertragung zu einem Messwandler dienenden Hebelwerk, mit mindestens einem der Krafteinleitung in das Hebelwerk dienenden längssteifen, biegeelastischen und mindestens eine Dünnstelle aufweisenden Koppelelement (13, 14, 16) versehen ist, wobei der mindestens eine Hebel (9, 15, 17) mittels eines eine Dünnstelle aufweisenden Biegelagers (10, 20, 12) am feststehenden Bereich (4) und/oder einem vorgeschalteten Hebel (9, 15) abgestützt ist, wobei eine Dünnstelle durch benachbarte materialfreie Bereiche entsteht und mindestens einen Dünnstellenbereich (21, 31, 41, 51, 61, 71, 81, 91) aufweist, der durch konkav ausgebildete, an materialfreie Bereiche (22, 23, 32, 33, 42, 43, 52, 53, 62, 63, 72, 73, 82, 83, 92, 93) angrenzende Oberflächen begrenzt ist, **dadurch gekennzeichnet, dass** mindestens einer der den Dünnstellenbereich (31, 41, 51, 61, 71, 81, 91) begrenzenden materialfreien Bereiche (32, 33, 42, 43, 52, 53, 62, 63, 72, 73, 82, 83, 92, 93) eine eine Einschnürung (36, 46, 56, 66, 76, 86, 96) des Dünnstellenbereichs (31, 41, 51, 61, 71, 81, 91) bildende Form aufweist.

2. Dünnstellen-Biegelager nach Anspruch 1, **dadurch gekennzeichnet, dass** sich das Drehzentrum des Dünnstellen-Biegelagers (6, 6a, 6b, 10, 20, 12) im Bereich der Einschnürung (36, 46, 56, 66, 76, 86, 96) befindet.

3. Dünnstellen-Biegelager nach Anspruch 1 oder 2, **dadurch gekennzeichnet, dass** das Dünnstellen-Biegelager integrierter Bestandteil eines Materialblocks ist und die materialfreien Bereiche (32, 33, 42, 43, 52, 53, 62, 63, 82, 83, 92, 93) durch dünne den Materialblock (1) senkrecht zu seiner ausgedehnten Ebene durchtrennende Schnittlinien (2) gebildet sind.

4. Dünnstellen-Biegelager nach Anspruch 1 oder 2, **dadurch gekennzeichnet, dass** das Dünnstellen-Biegelager integrierter Bestandteil eines Materialblocks ist und die materialfreien Bereiche (72, 73) durch mittels spanabhebender Bearbeitung erzeugte Hohlräume des Materialblocks (1) gebildet sind.

5. Dünnstellen-Biegelager nach einem der Ansprüche 1 bis 4, **dadurch gekennzeichnet, dass** die den Dünnstellenbereich (31, 41, 51, 61) begrenzenden materialfreien Bereiche (32, 33, 42,43, 52, 53, 62, 63) eine längliche Form mit mindestens einer Ausbuchtung (37, 38, 47, 57, 58, 59, 60, 67, 68), eine Einschnürung (36, 46, 56, 66) des Dünnstellenbereichs (31, 41, 51, 61) in dessen Mitte bildend, aufweisen.

6. Dünnstellen-Biegelager nach einem der Ansprüche 1 bis 4, **dadurch gekennzeichnet, dass** die den Dünnstellenbereich (81) begrenzenden materialfreien Bereiche (82, 83) eine längliche Form aufweisen, wobei sie eine Einschnürung (86) des Dünnstellenbereichs (81) in Form einer konstanten Verjüngung in Richtung zur Mitte des Dünnstellenbereichs (81) ausbilden.

7. Dünnstellen-Biegelager nach einem der Ansprüche 1 bis 4, **dadurch gekennzeichnet, dass** die den Dünnstellenbereich (91) begrenzenden materialfreien Bereiche (92, 93) eine längliche Form aufweisen, und durch mindestens eine Ausbuchtung (97, 98) der den Dünnstellenbereich (91) begrenzenden materialfreien Bereiche (92, 93) eine Einschnürung (96) ausformen, welche in Form einer konstanten Verjüngung in Richtung zur Mitte des Dünnstellenbereichs (91) ausgebildet ist.

8. Dünnstellen-Biegelager nach einem der Ansprüche 1 bis 4, **dadurch gekennzeichnet, dass** die den Dünnstellenbereich (71) begrenzenden materialfreien Bereiche durch jeweils eine bogenförmige einen ersten Radius aufweisende Ausnehmung (72, 73), mit einer eingelagerten einen zweiten kleineren Radius aufweisenden (77, 78) Ausnehmung charakterisiert sind.

9. Dünnstellen-Biegelager nach einem der Ansprüche 5 oder 8, **dadurch gekennzeichnet, dass** sich innerhalb einer bogenförmigen Ausbuchtung (57, 58) der den Dünnstellenbereich (51) begrenzenden materialfreie Bereiche (52, 53) weitere bogenförmige Ausbuchtungen (59, 60) mit im wesentlichen grösseren Krümmungen befinden.

10. Vorrichtung zur Kraftübertragung für eine Kraftmesseinrichtung, insbesondere eine Waage, mit einem feststehenden Bereich (4), mit einem mindestens einen übersetzungshebel (9, 15, 17) umfassenden, der Kraftübertragung zu einem Messwandler dienenden Hebelwerk, mit mindestens einem der Krafteinleitung in das Hebelwerk dienenden längssteifen, biegeelastischen und mindestens eine Dünnstelle aufweisenden Koppelelement (13, 14, 16), wobei der mindestens eine Hebel (9, 15, 17) mittels eines eine Dünnstelle aufweisenden Biegelagers (10, 20, 12) am feststehenden Bereich (4) und/oder einem vorgeschalteten Hebel (9, 15) abgestützt ist, wobei eine Dünnstelle mindestens einen Dünnstellenbereich (21, 31, 41, 51, 61, 71, 81, 91) aufweist, der durch konkav ausgebildete, an materialfreie Bereiche (22, 23, 32, 33, 42, 43, 52, 53, 62, 63, 72, 73, 82, 83, 92, 93) angrenzende Oberflächen begrenzt ist, **dadurch gekennzeichnet, dass** mindestens einer der den Dünnstellenbereich (31, 41, 51, 61, 71, 81, 91) begrenzenden materialfreien Bereiche (32, 33, 42, 43, 52, 53, 62, 63, 72, 73, 82, 83, 92, 93) eine eine Einschnürung (36, 46, 56, 66, 76, 86, 96) des Dünnstellenbereichs (31, 41, 51, 61, 71, 81, 91) bildende Form aufweist.

11. Vorrichtung zur Kraftübertragung für eine Kraftmesseinrichtung nach Anspruch 10, **dadurch gekennzeichnet, dass** sich das Drehzentrum des Biegelagers (6, 6a, 6b, 10, 20, 12) im Bereich der Einschnürung (36, 46, 56, 66, 76, 86, 96) befindet.

12. Vorrichtung zur Kraftübertragung nach Anspruch 10 oder 11, **dadurch gekennzeichnet, dass** das Hebelwerk und das mindestens eine Koppelelement (13, 14, 16) integrierter Bestandteil eines Materialblocks (1) sind.

13. Vorrichtung zur Kraftübertragung nach Anspruch 10 oder 11, **dadurch gekennzeichnet, dass** die Vorrichtung zur Kraftübertragung integrierter Bestandteil eines Materialblocks (1) ist.

14. Vorrichtung zur Kraftübertragung nach Anspruch 12 oder 13, **dadurch gekennzeichnet, dass** die materialfreien Bereiche (32, 33, 42, 43, 52, 53, 62, 63, 82, 83, 92, 93) durch dünne den Materialblock (1) senkrecht zur Drehebene des mindestens einen Übersetzungshebels (9, 15, 17) durchtrennende Schnittlinien (2) gebildet sind.

15. Vorrichtung zur Kraftübertragung nach Anspruch 12 oder 13, **dadurch gekennzeichnet, dass** die materialfreien Bereiche (72, 73) durch mittels spanabhebender Bearbeitung erzeugte Hohlräume des Materialblocks (1) gebildet sind.

16. Vorrichtung zur Kraftübertragung nach einem der Ansprüche 10 bis 15, **dadurch gekennzeichnet, dass** die den Dünnstellenbereich (31, 41, 51, 61) begrenzenden materialfreien Bereiche (32, 33, 42, 43, 52, 53, 62, 63) eine längliche Form mit mindestens einer Ausbuchtung (37, 38, 47, 57, 58, 59, 60, 67, 68), eine Einschnürung (36, 46, 56, 66) des Dünnstellenbereichs (31, 41, 51, 61) in dessen Mitte bildend, aufweisen.

17. Vorrichtung zur Kraftübertragung nach einem der Ansprüche 10 bis 15, **dadurch gekennzeichnet, dass** die den Dünnstellenbereich (81) begrenzenden materialfreien Bereiche (82, 83) eine längliche Form aufweisen, wobei sie eine Einschnürung (86) des Dünnstellenbereichs (81) in Form einer konstanten Verjüngung in Richtung zur Mitte des Dünnstellenbereichs (81) ausbilden.

18. Vorrichtung zur Kraftübertragung nach einem der Ansprüche 10 bis 15, **dadurch gekennzeichnet, dass** die den Dünnstellenbereich (91) begrenzenden materialfreien Bereiche (92, 93) eine längliche Form aufweisen und durch Ausbuchtungen (97, 98) der den Dünnstellenbereich (91) begrenzenden materialfreien Bereiche (92, 93) eine Einschnürung (96) ausbilden, welche in Form einer konstanten Verjüngung in Richtung zur Mitte des Dünnstellenbereichs (91) ausgebildet ist.

19. Vorrichtung zur Kraftübertragung nach einem der Ansprüche 10 bis 15, **dadurch gekennzeichnet, dass** die den Dünnstellenbereich (71) begrenzenden materialfreien Bereiche durch jeweils eine bogenförmige einen ersten Radius aufweisende Ausnehmung (72, 73), mit einer eingelagerten einen zweiten kleineren Radius aufweisenden (77, 78) Ausnehmung charakterisiert sind.

20. Vorrichtung zur Kraftübertragung nach einem der Ansprüche 16 oder 19, **dadurch gekennzeichnet, dass** sich innerhalb einer bogenförmigen Ausbuchtung (57, 58) der den Dünnstellenbereich (51) begrenzenden materialfreien Bereiche (52, 53) weitere bogenförmige Ausbuchtungen (59, 60) mit im wesentlichen grösseren Krümmungen befinden.

21. Vorrichtung zur Kraftübertragung nach einem der Ansprüche 10 bis 20, **dadurch gekennzeichnet, dass** die Materialstärke der mindestens einen Angriffsstelle (6, 6a, 6b) eines Koppelelements (13, 14, 16) sowie der mindestens einen Abstützstelle (10, 20, 12) des mindestens einen Hebels (9, 15, 17) durch Ausnehmungen in dem Materialblock (1) ausgehend von den beiden zur Drehebene des mindestens einen Hebels (9, 15, 17) parallelen ausgedehnten Flächen des Materialblocks (1) verringert ist und/oder dass durch Ausnehmungen (30) aus der Mitte des Materialblocks (1) der mindestens eine Hebel (9, 15, 17) und/oder dessen zugehörige Abstützstelle (10, 20, 12) und/oder das mindestens eine Koppelelement (13, 14, 16) und/oder dessen zugehörige Angriffsstelle (6, 6a, 6b) aufgeteilt sind.

## Claims

1. Flexure pivot in the form of a thin material connection by which solid material portions are flexibly connected, for use in a force-transfer mechanism with a stationary portion (4), with a lever arrangement comprising at least one reduction lever (9, 15, 17) serving to transmit a force to a measuring transducer, and with at least one coupling element (13, 14, 16) serving to introduce an input force into the lever arrangement, said coupling element being stiff against lengthwise deformation but flexible with regard to bending and having at least one thin material connection, wherein the at least one lever (9, 15, 17) is supported on the stationary portion (4) and/or on a preceding lever (9, 15) by means of a flexible fulcrum pivot (10, 20, 12) comprising a thin material connection, wherein a thin material connection is formed by adjacent material-free spaces and contains at least one thin material connection zone (21, 31, 41, 51, 61, 71, 81, 91) delimited by concave-shaped surfaces facing material-free spaces (22, 23, 32, 33, 42, 43, 52, 53, 62, 63, 72, 73, 82, 83, 92, 93), **characterized in that** at least one of the material-free spaces (32, 33, 42, 43, 52, 53, 62, 63, 72, 73, 82, 83, 92, 93) delimiting the thin material connection zone (31, 41, 51, 61, 71, 81, 91) has a shape that creates a constriction (36, 46, 56, 66, 76, 86, 96) of the thin material connection zone(31, 41, 51, 61, 71, 81, 91).

2. Flexure pivot in the form of a thin material connection according to claim 1, **characterized in that** the center of rotation of the flexure pivot (6, 6a, 6b, 10, 20, 12) lies in the area of the constriction (36, 46, 56, 66, 76, 86, 96).

3. Flexure pivot in the form of a thin material connection according to claim 1 or 2, **characterized in that** the flexure pivot is an integral part of a material block and the material-free spaces (32, 33, 42, 43, 52, 53, 62, 63, 72, 73, 82, 83, 92, 93) are formed by narrow line cuts (2) traversing the material block (1) perpendicularly to its main plane.

4. Flexure pivot in the form of a thin material connection according to claim 1 or 2, **characterized in that** the flexure pivot is an integral part of a material block and the material-free spaces (72, 73) are formed as hollow spaces of the material block (1) by means of machine tools.

5. Flexure pivot in the form of a thin material connection according to one of the claims 1 to 4, **characterized in that** the material-free spaces (32, 33, 42, 43, 52, 53, 62, 63) delimiting the thin material connection zone (31, 41, 51, 61) have an elongated shape with at least one depression (37, 38, 47, 57, 58, 59, 60, 67, 68) forming a constriction (36, 46, 56, 66) of the mid-portion of the thin material connection zone (31, 41, 51, 61).

6. Flexure pivot in the form of a thin material connection according to one of the claims 1 to 4, **characterized in that** the material-free spaces (82, 83) delimiting the thin material connection zone (81) have an elongated shape and form a constriction (86) of the thin material connection (81), said constriction being shaped with a constant narrowing taper towards the middle of the thin material connection (81).

7. Flexure pivot in the form of a thin material connection according to one of the claims 1 to 4, **characterized in that** the material-free spaces (92, 93) delimiting the thin material connection (81) have an elongated shape, wherein at least one depression (97, 98) of the material-free spaces (92, 93) delimiting the thin material connection zone (81) forms a constriction (96) of the thin material connection zone (91), said constriction being shaped with a constant narrowing taper towards the middle of the thin material connection zone (91).

8. Flexure pivot in the form of a thin material connection according to one of the claims 1 to 4, **characterized in that** each of the material-free spaces delimiting the thin material connection zone (81) is bounded by an arcuate cutout (72, 73) with a first curvature radius in which an arcuate cutout (77, 78) with a second, smaller curvature radius is imbedded.

9. Flexure pivot in the form of a thin material connection according to one of the claims 5 or 8, **characterized in that** an arcuate depression (57, 58) of the material-free spaces (52, 53) delimiting the thin material connection (51) contains further arcuate depressions (59, 60) with significantly stronger curvatures.

10. Force-transfer mechanism for a force-measuring device, in particular for a balance, with a stationary portion (4), with a lever arrangement comprising at least one reduction lever (9, 15, 17) serving to transmit a force to a measuring transducer, and with at least one coupling element (13, 14, 16) serving to introduce an input force into the lever arrangement, said coupling element being stiff against lengthwise deformation but flexible with regard to bending and having at least one thin material connection, wherein the at least one lever (9, 15, 17) is supported on the stationary portion (4) and/or on a preceding lever (9, 15) by means of a flexible fulcrum pivot (10, 20, 12) comprising a thin material connection; wherein a thin material connection comprises at least one thin material connection zone (21, 31, 41, 51, 61, 71, 81, 91) that is delimited by concave-shaped surfaces facing material-free spaces (22, 23, 32, 33, 42, 43, 52, 53, 62, 63, 72, 73, 82, 83, 92, 93), **characterized in that** at least one of the material-free spaces (32, 33, 42, 43, 52, 53, 62, 63, 72, 73, 82, 83, 92, 93) delimiting the thin material connection zone (31, 41, 51, 61, 71, 81, 91) has a shape that creates a constriction (36, 46, 56, 66, 76, 86, 96) of the thin material connection zone (31, 41, 51, 61, 71, 81, 91).

11. Force-transfer mechanism for a force-measuring device according to claim 10, **characterized in that** the center of rotation of the flexure pivot (6, 6a, 6b, 10, 20, 12) lies in the area of the constriction (36, 46, 56, 66, 76, 86, 96) .

12. Force-transfer mechanism according to claim 10 or 11, **characterized in that** the lever arrangement and at least one coupling element (13, 14, 16) are integral parts of a material block (1).

13. Force-transfer mechanism according to claim 10 or 11, **characterized in that** the force-transfer mechanism is an integral part of a material block (1).

14. Force-transfer mechanism according to claim 12 or 13, **characterized in that** the material-free spaces (32, 33, 42, 43, 52, 53, 62, 63, 82, 83, 92, 93) are formed by narrow line cuts (2) traversing the material block (1) perpendicularly relative to the plane of rotation of the at least one reduction lever (9, 15, 17).

15. Force-transfer mechanism according to claim 12 or 13, **characterized in that** the material-free spaces (72, 73) are hollow spaces formed in the material block (1) by machine tools.

16. Force-transfer mechanism according to one of the claims 10 to 15, **characterized in that** the material-free spaces (32, 33, 42, 43, 52, 53, 62, 63) delimiting the thin material connection zone (31, 41, 51, 61) have an elongated shape with at least one depression (37, 38, 47, 57, 58, 59, 60, 67, 68) forming a constriction (36, 46, 56, 66) of the mid-portion of the thin material connection zone (31, 41, 51, 61).

17. Force-transfer mechanism according to one of the claims 10 to 15, **characterized in that** the material-free spaces (82, 83) delimiting the thin material connection (81) have an elongated shape and form a constriction (86) of the thin material connection (81), said constriction being shaped with a constant narrowing taper towards the middle of the thin material connection zone (91).

18. Force-transfer mechanism according to one of the claims 10 to 15, **characterized in that** the material-free spaces (92, 93) delimiting the thin material connection zone (91) have an elongated shape, wherein contour depressions (97, 98) of the material-free spaces (92, 93) delimiting the thin material connection (91) form a constriction (96) of the thin material connection zone (91), said constriction being shaped with a constant narrowing taper towards the middle of the thin material connection zone (91).

19. Force-transfer mechanism according to one of the claims 10 to 15, **characterized in that** each of the material-free spaces delimiting the thin material connection zone (71) is bounded by an arcuate cutout (72, 73) with a first radius in which an arcuate cutout (77, 78) with a second, smaller radius is imbedded.

20. Force-transfer mechanism according to one of the claims 16 or 19, **characterized in that** an arcuate contour depression (57, 58) of the material-free spaces (52, 53) delimiting the thin material connection zone (51) contains further arcuate contour depressions (59, 60) shaped in essence with stronger curvatures.

21. Force-transfer mechanism according to one of the claims 10 to 20, **characterized in that** the material cross-section of the at least one force-concentrating end portion (6, 6a, 6b) of a coupling element (13, 14, 16) and of the at least one fulcrum (10, 20, 12) of the at least one lever (9, 15, 17) is reduced by lateral recesses originating from the main surfaces of the material block (1) which are parallel to the plane of rotation of the at least one lever (9, 15, 17) and/or that the at least one lever (9, 15, 17) and/or its respective lever fulcrum (10, 20, 12) and/or the at least one coupling element (13, 14, 16) and/or its respective force-concentrating end portion (6, 6a, 6b) are divided in two.

## Revendications

1. Palier de flexion à endroits minces pour la liaison élastique de zones de matériau pour un dispositif pour la transmission de force, lequel dispositif est doté d'une zone (4) fixe, d'un ensemble de leviers comprenant au moins un levier de transmission (9, 15, 17) et servant à la transmission de force à un convertisseur de mesure, d'au moins un élément de couplage (13, 14, 16) servant à l'application de force dans l'ensemble de leviers, rigide en longueur, élastique en flexion et présentant au moins un endroit mince, le au moins un levier (9, 15, 17) étant soutenu au moyen d'un palier de flexion (10, 20, 12) présentant un endroit mince sur la zone (4) fixe et/ou un levier (9, 15) monté en amont, un endroit mince étant formé par des zones sans matériau voisines et présentant au moins une zone à endroits minces (21, 31, 41, 51, 61, 71, 81, 91), qui est délimitée par des surfaces conçues de façon concave et contiguës à des zones (22, 23, 32, 33, 42, 43, 52, 53, 62, 63, 72, 73, 82, 83, 92, 93) sans matériau, **caractérisé en ce qu'**au moins une des zones (32, 33, 42, 43, 52, 53, 62, 63, 72, 73, 82, 83, 92, 93) sans matériau et délimitant la zone à endroits minces (31, 41, 51, 61, 71, 81, 91), présente une forme formant un rétrécissement (36, 43, 56, 66, 76, 86, 96) de la zone à endroits minces (31, 41, 51, 61, 71, 81, 91).

2. Palier de flexion à endroits minces selon la revendication 1, **caractérisé en ce que** le centre de rotation du palier de flexion à endroits minces (6, 6a, 6b, 10, 20, 12) se trouve dans la zone du rétrécissement (36, 46, 56, 76, 86, 96).

3. Palier de flexion à endroits minces selon la revendication 1 ou 2, **caractérisé en ce que** le palier de flexion à endroits minces est une partie intégrée d'un bloc de matériau et les zones (32, 33, 42, 43, 52, 53, 62, 63, 72, 73, 82, 83, 92, 93) sans matériau sont formées par des lignes de coupe (2) minces et traversant le bloc de matériau (1) perpendiculairement à son plan étendu.

4. Palier de flexion à endroits minces selon la revendication 1 ou 2, **caractérisé en ce que** le palier de flexion à endroits minces est une partie intégrée d'un bloc de matériau et les zones (72, 73) sans matériau sont formées par des cavités, générées au moyen d'un usinage par enlèvement de copeaux, du bloc de matériau (1).

5. Palier de flexion à endroits minces selon l'une quelconque des revendications 1 à 4, **caractérisé en ce que** les zones (32, 33, 42, 43, 52, 53, 62, 63) sans matériau et délimitant la zone à endroits minces (31, 41, 51, 61) présentent une forme allongée avec au moins une bosse sortante (37, 38, 47, 57, 58, 59, 60, 67, 68), formant un rétrécissement (36, 46, 56, 66) de la zone à endroits minces (31, 41, 51, 61) en son centre.

6. Palier de flexion à endroits minces selon l'une quelconque des revendications 1 à 4, **caractérisé en ce que** les zones (82, 83) sans matériau et délimitant la zone à endroits minces (81) présentent une forme allongée, ces zones formant un rétrécissement (86) de la zone à endroits minces (81) sous la forme d'un rétrécissement constant en direction du centre de la zone à endroits minces (81).

7. Palier de flexion à endroits minces selon l'une quelconque des revendications 1 à 4, **caractérisé en ce que** les zones (92, 93) sans matériau et délimitant la zone à endroits minces (91) présentent une forme allongée, et forment par au moins une bosse sortante (97, 98) des zones (92, 93) sans matériau et délimitant la zone à endroits minces (91) un rétrécissement (96) qui est conçu sous la forme d'un rétrécissement constant en direction du centre de la zone à endroits minces (91).

8. Palier de flexion à endroits minces selon l'une quelconque des revendications 1 à 4, **caractérisé en ce que** les zones sans matériau et délimitant la zone à endroits minces (71) sont **caractérisées par** respectivement un évidement (72, 73) en forme d'arc et présentant un premier rayon, avec un évidement intercalé et présentant un second rayon plus petit (77, 78).

9. Palier de flexion à endroits minces selon l'une quelconque des revendications 5 ou 8, **caractérisé en ce que** d'autres bosses sortantes (59, 60) en forme d'arc avec des courbures sensiblement plus grandes se trouvent à l'intérieur d'une bosse sortante (57, 58) en forme d'arc des zones (52, 53) sans matériau et délimitant la zone à endroits minces (51).

10. Dispositif pour la transmission de force pour un appareil de mesure de force, en particulier une balance, avec une zone (4) fixe, avec un ensemble de leviers comprenant au moins un levier de transmission (9, 15, 17) et servant à la transmission de force à un convertisseur de mesure, avec au moins un élément de couplage (13, 14, 16) servant à l'application de force dans l'ensemble de leviers, rigide en longueur, élastique en flexion et présentant au moins un endroit mince, le au moins un levier (9, 15, 17) étant soutenu au moyen d'un palier de flexion (10, 20, 12) présentant un endroit mince sur la zone (4) fixe et/ou un levier (9, 15) monté en amont, un endroit mince présentant au moins une zone à endroits minces (21, 31, 41, 51, 61, 71, 81, 91), qui est délimitée par des surfaces de conception concave et contiguës à des zones (22, 23, 32, 33, 42, 43, 52, 53, 62, 63, 72, 73, 82, 83, 92, 93) sans matériau, **caractérisé en ce qu'**au moins une des zones sans matériau (32, 33, 42, 43, 52, 53, 62, 63, 72, 73, 82, 83, 92, 93) contiguë à la zone à endroits minces (31, 41, 51, 61, 71, 81, 91) présente une forme formant un rétrécissement (36, 46, 56, 66, 76, 86,96) de la zone à endroits minces (31, 41, 51, 61, 71, 81, 91).

11. Dispositif pour la transmission de force pour un appareil de mesure de force selon la revendication 10, **caractérisé en ce que** le centre de rotation du palier de flexion (6, 6a, 6b, 10, 20, 12) se trouve dans la zone du rétrécissement (36, 46, 56, 66, 76, 86, 96).

12. Dispositif pour la transmission de force selon la revendication 10 ou 11, **caractérisé en ce que** le levier et le au moins un élément de couplage (13, 14, 16) sont une partie intégrée d'un bloc de matériau (1).

13. Dispositif pour la transmission de force selon la revendication 10 ou 11, **caractérisé en ce que** le dispositif pour la transmission de force est une partie intégrée d'un bloc de matériau (1).

14. Dispositif pour la transmission de force selon la revendication 12 ou 13, **caractérisé en ce que** les zones sans matériau (32, 33, 42, 43, 52, 53, 62, 63, 82, 83, 92, 93) sont formées par des lignes de coupe (2) minces et traversant le bloc de matériau (1) perpendiculairement au plan de rotation du au moins un levier de transmission (9, 15, 17).

15. Dispositif pour la transmission de force selon la revendication 12 ou 13, **caractérisé en ce que** les zones (72, 73) sans matériau sont formées par des cavités, générées au moyen d'un usinage par enlèvement de copeaux, du bloc de matériau (1).

16. Dispositif pour la transmission de force selon l'une quelconque des revendications 10 à 15, **caractérisé en ce que** les zones (32, 33, 42, 43, 52, 53, 62, 63) sans matériau et délimitant la zone à endroits minces (31, 41, 51, 61) présentent une forme allongée avec au moins une bosse sortante (37, 38, 47, 57, 58, 59, 60, 67, 68), formant un rétrécissement (36, 46, 56, 66) de la zone à endroits minces (31, 41, 51, 61) en son centre.

17. Dispositif pour la transmission de force selon l'une quelconque des revendications 10 à 15, **caractérisé en ce que** les zones (82, 83) sans matériau et délimitant la zone à endroits minces (81) présentent une forme allongée, ces zones formant un rétrécissement (86) de la zone à endroits minces (81) sous la forme d'un rétrécissement constant en direction du centre de la zone à endroits minces (81).

18. Dispositif pour la transmission de force selon l'une quelconque des revendications 10 à 15, **caractérisé en ce que** les zones (92, 93) sans matériau et délimitant la zone à endroits minces (91) présentent une forme allongée et forment par des bosses sortantes (97, 98) des zones (92, 93) sans matériau et délimitant la zone à endroits minces (91) un rétrécissement (96) qui est conçu sous la forme d'un rétrécissement constant en direction du centre de la zone à endroits minces (91).

19. Dispositif pour la transmission de force selon l'une quelconque des revendications 10 à 15, **caractérisé en ce que** les zones sans matériau et délimitant la zone à endroits minces (71) sont **caractérisées par** respectivement un évidement (72, 73), présentant un premier rayon, avec un évidement intercalé et présentant un second rayon (77, 78) plus petit.

20. Dispositif pour la transmission de force selon l'une quelconque des revendications 16 ou 19, **caractérisé en ce que** d'autres bosses sortantes (59, 60) en forme d'arc avec des courbures sensiblement plus grandes se trouvent à l'intérieur d'une bosse sortante (57, 58) en forme d'arc des zones (52,53) sans matériau et délimitant la zone à endroits minces (51).

21. Dispositif pour la transmission de force selon l'une quelconque des revendications 10 à 20, **caractérisé en ce que** l'épaisseur de matériau du au moins un point d'application (6, 6a, 6b) d'un élément de couplage (13, 14, 16) et du au moins un point d'appui (10, 20, 12) du au moins un levier (9, 15, 17) est réduite par des évidements dans le bloc de matériau (1) à partir des deux surfaces, étendues, parallèles au plan de rotation du au moins un levier (9, 15, 17), du bloc de matériau (1) et/ou **en ce que** le au moins un levier (9, 15, 17) et/ou son point d'appui (10, 20, 12) spécifique et/ou le au moins un élément de couplage (13, 14, 16) et/ou son point d'application (6, 6a, 6b) spécifique sont divisés par des évidements (30) à partir du centre du bloc de matériau (1).
